# EUROPEAN PATENT APPLICATION

(11) **EP 1 775 674 A1**
(43) Date of publication of application: **18.04.2007**
(21) Application number: 05022164.7
(22) Date of filing: 11.10.2005
(51) Int. Cl.: G06K 9/00, G06K 9/20

(54) **Press-trigger fingerprint sensor module**

(71) Applicant: Aimgene Technology Co., Ltd., Chung Ho City (TW)
(72) Inventor: Chiu, Li-Kuo, Chung Ho City Tapei Hsien (TW)
(74) Representative: Zeitler, Giselher

(57) **Abstract**

A press-trigger fingerprint sensor module is disclosed, comprising two embedded switches, a sensor panel and a fingerprint recognition processor. When the user puts the finger in predetermined position over the sensor panel, the first switch is activated. The first switch sends out a high signal to have power connected to the fingerprint sensor. Without changing the position of the finger, the pressure being exerted perpendicular to the panel surface is transferred to the second switch, which then senses the presence of the finger and captures an image. The fingerprint recognition is performed subsequently. This sensor switch mechanism enables the system to obtain fast and high resolution images for fingerprint recognition. The smaller size of the fingerprint sensor not only reduces the power demands, but also breaks through the size barrier for encouraging more applications on mobile device.

## Description

### BACKGROUND OF THE INVENTION

### 1. Field of the Invention

The present invention relates to a press-trigger fingerprint sensor module using an innovative sensor switch mechanism to achieve high reliability and low power consumption.

### 2. The Related Art

The biometric authentication is the latest technique of personal identification that uses the constant features of a person, such as voice print, fingerprint, iris pattern, etc. The most important point is that these characteristics are unique to a person so that they cannot be stolen or denied in any circumstances. There is only about one in 60 billion chance that someone else might share the same fingerprint as the original person.

In conventional fingerprint recognition systems, the fingerprint images are captured and passed to a dedicated computer that processes the digital fingerprint information to determine whether a fingerprint image is matched with the reference pattern.

A prior art design introduced an optical pattern recognition that used optical sensing to obtain fingerprint image. The problem is that the system is too complicated to be implemented on a mobile device and to achieve lower power consumption.

Another design disclosed a fingerprint recognition system and processing software that needs to be pre-installed on a computer, but the fingerprint recognition function cannot be used on a different computer unless it is also pre-installed with the same software.

The conventional technique is to provide the fingerprint recognition software on a compact disc, which allows the user to install the driver programs in the computer attaching to the fingerprint sensor. The fingerprint recognition system can be linked to a solenoid controlled valve or motor, through an appropriate communication interface, to synchronize a given task.

The digital signal processing technology has been extensively used in many scientific fields. The proliferation of the digital devices and the advancement in biometric authentication technique have gradually made the conventional personal identification tools such as tokens, passwords, key and locks, and plastic ID cards outmoded. The fingerprint, voice print, and iris pattern of a person can be taken as permanent marks for the purpose of personal identification.

Ordinary people can use the personal identification technique without having to worry about theft or illegal duplication. Therefore, the fingerprint recognition is ideal for door entry security check, identification for bank vaults, personal identification for ATM, criminal science, and other applications that need highly reliable access permission.

However, the conventional fingerprint recognition devices need continuous power supply for the system to maintain normal operation. If a fingerprint sensor is installed on a portable device, the current battery will be only be able to maintain normal operation for several hours, which needs frequent change of batteries or battery recharge. Therefore, this is not that convenient for average users.

A typical fingerprint covers an area of 100 mm2. The fingerprint sensor usually needs the fingertip to be in direct contact with the sensor panel in order to obtain a complete fingerprint for computer analysis. Suppose that the person's finger were not exactly placed on the sensor panel, or the scan were started too early, the fingerprint image so obtained could be incomplete, resulting in questionable fingerprint.

In these aspects, the press-trigger fingerprint sensor according to the present invention substantially reduces or obviates the limitations and disadvantages of the

### prior art.

### SUMMARY OF THE INVENTION

The primary object of the invention is to provide a sensor switch mechanism for press-trigger fingerprint sensor that enables the power supply to the fingerprint sensor only when the finger is placed in predetermined position over the sensor panel and touches against the sensor switch, so the power consumption can be significantly reduced for longer service time as compared with conventional fingerprint sensors.

The second object of the invention is to provide a sensor switch mechanism for press-trigger fingerprint sensor that triggers the fingerprint recognition only when the finger presses onto the sensor panel to have the fingertip in direct contact with the sensor panel, so that the reliability of the fingerprint sensor can be remarkably improved.

The third object of the invention is to provide a press-trigger fingerprint sensor module that is actually an independent fingerprint recognition module, including the fingerprint acquisition and recognition in one unit, making it easy to operate and possessing high reliability.

The fourth object of the invention is to provide a press-trigger fingerprint sensor module that has the overall size of the fingerprint sensor considerably reduced as compared with conventional fingerprint sensors.

The fifth object of the invention is to provide a press-trigger fingerprint sensor module that has the fingerprint recognition time significantly reduced as compared with conventional fingerprint sensors.

The sixth object of the invention is to provide a press-trigger fingerprint sensor module that can be integrated with a serial communication interface and a control board for synchronizing a given task to be performed to ensure system security and operation reliability.

The sensor switch mechanism for the pressure-sensitive fingerprint sensor is comprised of a two-level switch mechanism: the first switch is to enable the power supply to the fingerprint sensor when the first switch is triggered by acceptable finger action, and the second switch is to activate the fingerprint sensing and recognition processes when the second switch is depressed.

To attain the above-mentioned objects, the press-trigger fingerprint sensor module comprises two embedded switches, a sensor panel and a fingerprint recognition processor.

The sensor switch mechanism for the fingerprint sensor is composed of a first switch and a second switch. When acceptable finger action kicks off the first switch, the power supply to the fingerprint sensor is enabled. When the second switch is depressed, a fingerprint image is captured and processed by the fingerprint recognition processor.

In the operational aspects, the finger is placed in predetermined position over the sensor panel to kick off the first switch to control the power supply to the fingerprint sensor. After the first switch is triggered, the first switch sends out a high signal (high voltage) to the control board, which then enables the power supply to the fingerprint sensor. Shortly after that, without changing the position of the finger, the finger then presses onto the sensor panel, only requiring little pressure, so that the pressure being exerted on the sensor panel is transferred to the second switch underneath. Then, the piezo sensor underneath the sensor panel detects the presence of the finger on the sensor panel and initiates the fingerprint imaging. This simple process is succeeded by a fingerprint recognition process to produce a mapping result.

The sensor operation involves two consecutive steps. The acceptable finger action is a coherent movement of the finger that does the job of initiating the fingerprint recognition automatically. However, the finger action has to be in compliance with one of the acceptable finger actions to be described below.

The acceptable finger action is determined by the type of first switch used. For a touch sensor, the finger has to be placed in predetermined position in such a way to touch against the tactile switch, so that the fingerprint sensor is enabled. For a piezo sensor, when the finger presses on the press switch, the fingerprint sensor is enabled. For an infrared sensing device, when the finger cuts off the beam on the receiving end of the sensor switch, the fingerprint sensor is enabled.

The fingerprint sensor is ergonomically designed, in that the positions of the first switch (at the tip of the sensor panel) and second switch (below the sensor panel) allow the fingertip in close contact with the sensor panel for image scan. This design can raise the accuracy of the fingerprint recognition and the reliability of the system.

The accuracy of the fingerprint recognition is related to the collection of digital fingerprint information from multitude data points all over the sensor panel. With the finger spread out over the panel, a high resolution fingerprint can be obtained to produce reliable mapping results.

These along with other features of novelty which characterize the invention, are pointed out with particularity in the claims annexed to and forming a part of this disclosure. For a better understanding of the invention, the operating advantages and the specific objectives attained by its uses, references should be made to the accompanying drawings and descriptive matter illustrated in preferred embodiments of the invention.

### BRIEF DESCRIPTION OF THE DRAWINGS

FIG. 1 is a system block diagram of the present invention;

FIG. 2 is an exploded view of the fingerprint recognition module in accordance with the invention;

FIG. 3 is a possible architecture of an integrated fingerprint sensor with the control board embedded in the system hardware.

### DETAILED DESCRIPTION OF THE PREFERRED EMBODIMENT

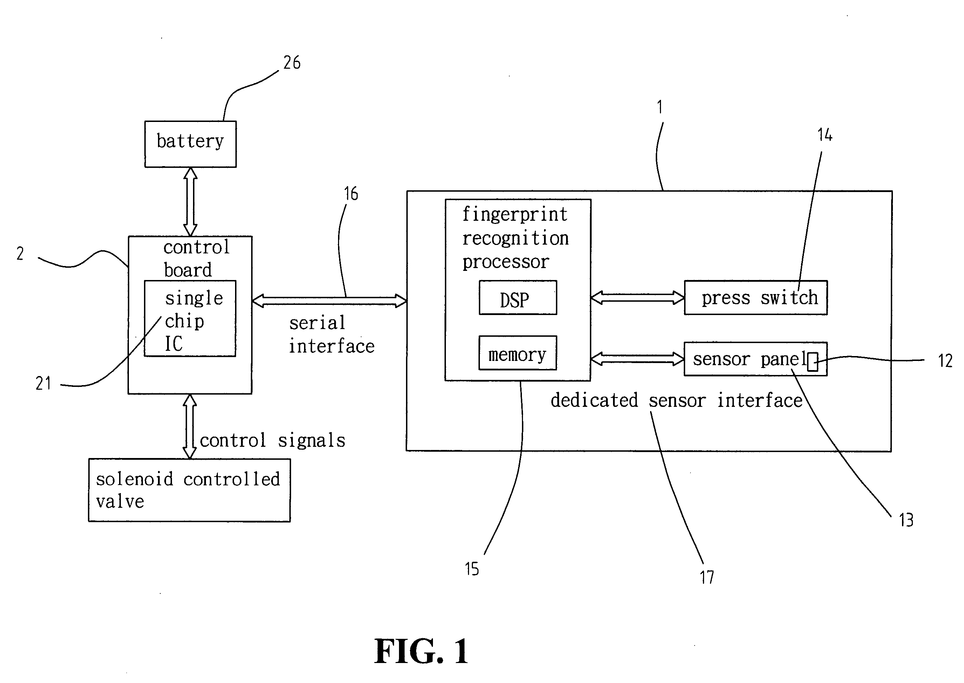

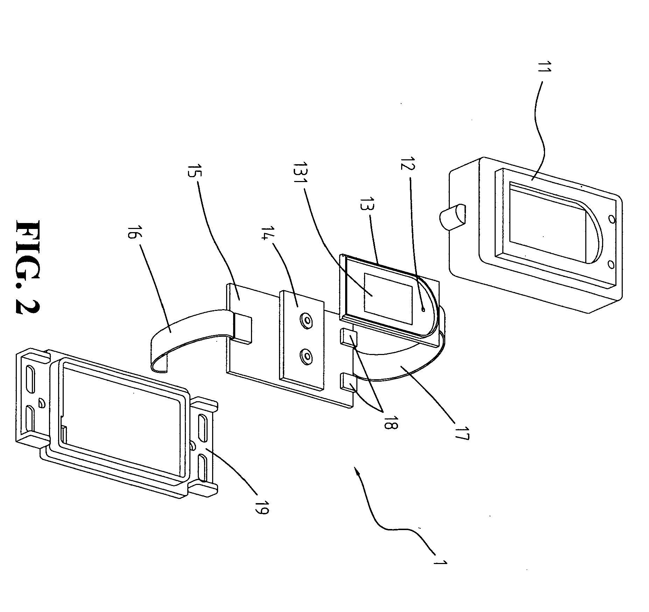

Referring to FIGS. 1, 2, the press-trigger fingerprint sensor module, actually an independent fingerprint recognition module, comprises two embedded switches 12, 14, a sensor panel 13 and a fingerprint recognition processor 15.

The sensor switch mechanism for the fingerprint sensor is composed of a two-level switch mechanism: a first switch 12 which is used to enable the power supply to the fingerprint sensor 1, and a second switch 14 which is used to activate the fingerprint sensing and recognition processes.

The first switch 12 of the fingerprint sensor 1 is installed at the tip of the sensor panel 13, which issues a high signal through a serial interface 16 to enable the power supply to the fingerprint sensor 1 when the first switch 12 is triggered by an acceptable finger action. The first switch 12 only occupies a small area at the tip of the sensor panel 13. The second switch 14 is installed underneath the sensor panel 13, such that the pressure being exerted on the panel surface is automatically transferred to the second switch 14 to activate the fingerprint recognition process.

When the finger is placed in predetermined position over the sensor panel 13, acceptable finger action triggers the first switch 12 to enable the power supply to the fingerprint sensor 1. Without changing the finger position, the finger then presses onto the sensor panel 13, so that the pressure being exerted on the sensor panel 13 is transferred to the second switch 14 underneath. The second switch 14 initiates the fingerprint imaging and recognition.

The acceptable finger action is determined by the type of first switch 12 used, for which three types of finger action are accepted. For a touch sensor, the finger has to be placed in predetermined position over the sensor panel 13 to touch against the tactile switch. For a piezo sensor, the switch is enabled when the finger presses onto the press switch. For an infrared sensing device, the switch is enabled when the finger cuts off the beam on the receiving end of the sensor switch.

After the first switch 12 is triggered, a high signal is issued to the control board 2, enabling the power supply to the fingerprint sensor 1. At this time, the finger is already placed in predetermined position. It shall be noted that when the first switch 12 is triggered, the fingerprint recognition process is not started yet. Without changing the position of the finger, the finger then presses onto the sensor panel 13 indirectly triggering the second switch 14, so the fingerprint imaging and recognition processes are executed consecutively.

According to the first embodiment of the invention, the first switch 12 is a tactile switch. The finger has to be position in such a way that the finger will touch against the tactile switch.

As an alternative, the first switch 12 can be a piezo sensor. When the finger is positioned over the sensor panel 13, the finger has to be placed in such a way that pressure will be exerted perpendicular to the panel surface to depress the press switch.

As another alternative, the first switch 12 can be an infrared sensing device. When the finger is positioned over the sensor panel 13, the finger has to be placed in such a way that the finger will cut off the beam on the receiving end to trigger the sensor switch.

When the finger presses onto the sensor panel 13 and is placed in predetermined position over the sensor panel 13, the fingertip is spread out and in direct contact with the panel surface, so a high resolution fingerprint image can be easily obtained for image processing and analysis.

When capturing an image, the fingerprint sensor 1 electronically senses the fingertip ridges, twists, and rings at the fingertip to produce a digital image. The simple imaging process is succeeded by a mapping and computation on the fingerprint. The fingerprint recognition processor 15 interprets the digital image, and then compares with a reference sample in memory to determine if it is a match.

Since the power supply is enabled only after the finger kicks off the switch trigger 12, the fingerprint sensor 1 does not have to be in the standby mode most of the time, so this power-saving feature can have the service time of the fingerprint sensor 1 significantly extended. The power supply can be a battery source 26.

Referring to FIG. 2, the sensor panel 13 further includes an image processing chip 131. Through the 3-color LED 18, the current operation status of the sensor is continuously fed to the user. The dedicated sensor interface 17 is used for connecting the sensor panel 13 and fingerprint recognition processor 15, so that digital fingerprint information is passed from the sensor panel 13 to the fingerprint recognition processor 15. The serial interface 16 is used for connecting the fingerprint sensor 1 and the external control board 2.

The upper and lower shells 11, 19 are clipped together to form a box-like structure, having the first switch 12, sensor panel 13, second switch 14, fingerprint recognition processor 15, serial interface 16 and dedicated sensor interface 17, all covered within the body.

The sensor is ergonomically designed, so that the positions of the first switch 12 (at the tip of the sensor panel 13) and the second switch 14 (below the sensor panel 13) are designed to have the fingertip spread out and in close contact with the sensor panel 13 as the finger is positioned over the sensor panel 13 for image scan. This design can raise the accuracy of the fingerprint recognition, and the reliability of the system.

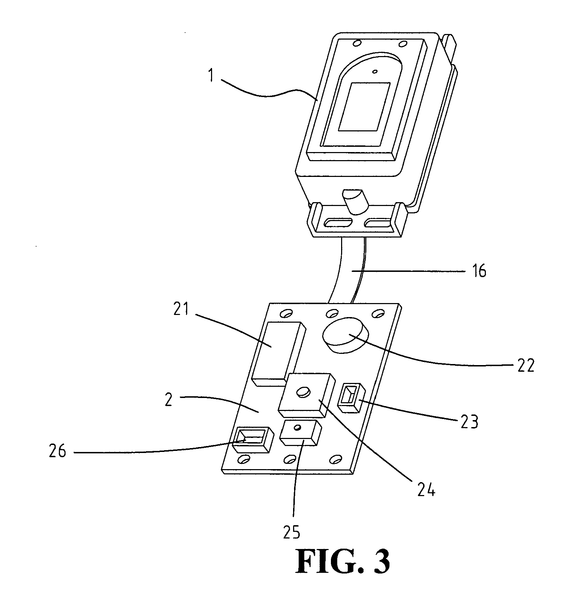

Referring to FIG. 3, the box-like fingerprint sensor module 1 is connected to a control board 2 having a single-chip processor 21, a buzzer 22, a power output 23 (for connecting to a solenoid controlled valve), a create fingerprint button 24, a delete fingerprint button 25, and a battery 26. The serial interface 16 between the fingerprint sensor 1 and the control board 2 is used to electrically connect the fingerprint sensor 1 and control board 2, through which high signal for enabling the power supply and the result of the fingerprint mapping are passed back to the control board 2.

The result of fingerprint mapping can be either a match, or a mismatch in the other case. If the result obtained by the control board 2 is a mismatch, the battery 26 is cut off. If this is a match, the battery is cut off, and then the control board 2 issues a signal to a mechanical device requesting an appropriate action to be taken such as opening of the vault door.

The present invention provides an independent fingerprint recognition module (including the fingerprint acquisition and recognition). With proper data encryption, the fingerprint sensor module 1 can be installed on the front end and the control board 2 on the back end. The fingerprint sensor 1 is connected to the control board 2 through a serial interface 16, and the control board 2 is also connected to a mechanical driver mechanism for performing a synchronized task.

The fingerprint sensor module 1 and control board 2 can be put in the same control box to become an independent operation unit. Alternatively, the fingerprint sensor module 1 can also be incorporated in another piece of control equipment including a mechanical driver mechanism. The fingerprint sensor 1 can be made to be an integrated security system that can be applied on keyless access control, credit card authentication, mobile phone and computer locks, and ATM personal identification, replacing the conventional password control and ID cards.

The compact design of the fingerprint sensor 1 and fast fingerprint recognition are some of the advantages of the present invention. The smaller size not only reduces the power demands, but also breaks through the size barrier for encouraging more applications on mobile device.

Although the present invention has been described with reference to the preferred embodiments thereof, it is apparent to those skilled in the art that a variety of modifications and changes may be made without departing from the spirit and scope of the present invention which is intended to be defined by the appended claims.

## Claims

1. A press-trigger fingerprint sensor module, comprising:
a first switch that is responsible for power connection to the fingerprint sensor;
a second switch that is responsible for activating the fingerprint imaging and recognition processes;
a sensor panel that is responsible for capturing an image of the fingerprint, which is laid over the sensor panel and immediately above the second switch so that pressure being exerted on the sensor panel can be transferred to the second switch for activating the sensor; and
a fingerprint recognition processor that is responsible for mapping and interpreting the fingerprint image,
wherein when the finger is positioned over the sensor panel, the first switch automatically activates the power supply to the fingerprint sensor, and without changing the position of the finger, the finger presses onto the sensor panel to have the pressure transferred to the second switch in order to activate the sensor for image scan and fingerprint recognition.

2. The fingerprint sensor as claimed in claim **1**, wherein the first switch is installed on the sensor panel, such that when the finger is positioned over the sensor panel, the finger automatically touches the first switch to enable the power supply to the sensor, and then without having to change the finger position, the pressure being exerted on the sensor panel is transferred to the second switch underneath to activate the fingerprint imaging and recognition processes.

3. The fingerprint sensor as claimed in claim **1**, wherein the first switch is installed underneath the sensor panel, such that when the finger is positioned over the sensor panel, the finger automatically presses onto the sensor panel to enable the power supply to the sensor, and then without having to change the finger position, the pressure being exerted on the sensor panel is transferred to the second switch underneath to activate the fingerprint imaging and recognition processes.

4. The fingerprint sensor as claimed in claim **1**, wherein the first switch is installed on the sensor panel, such that when the finger is positioned over the sensor panel, the finger automatically cuts off the beam on the receiving end of the infrared sensor, and then without having to change the finger position, the pressure being exerted on the sensor panel is transferred to the second switch underneath to activate the fingerprint imaging and recognition processes.

5. The fingerprint sensor as claimed in claim **1**, wherein the fingerprint sensor module is installed along with a control board, so that when the control board receives a high signal from the first switch, power is connected to the fingerprint sensor to set up the sensor for fingerprint recognition, and when the result of the fingerprint recognition process received by the control board is a mismatch, the power is cut off.

6. The fingerprint sensor as claimed in claim **1**, wherein the fingerprint sensor module is installed along with a control board, so that when the control board receives a high signal from the first switch, power is connected to the fingerprint sensor to set up the sensor for fingerprint recognition, and when the result of the fingerprint recognition process received by the control board is a match, the power is cut off and a signal is issued to a mechanical driver mechanism to have a given task performed.

7. The fingerprint sensor as claimed in claim **1**, wherein the sensor panel is connected to the fingerprint recognition processor through a dedicated sensor interface, so that the fingerprint image is captured and passed to the fingerprint recognition processor.

8. The fingerprint sensor as claimed in claim **5**, wherein when the fingerprint sensor is connected to the control board through a serial interface, so that high signal for enabling the power supply and mapping results are passed back to the control board for determining an appropriate action to be taken.

9. The fingerprint sensor as claimed in claim 6, wherein when the fingerprint sensor is connected to the control board through a serial interface, so that high signal for enabling the power supply and mapping results are passed back to the control board for determining an appropriate action to be taken.

10. The fingerprint sensor as claimed in claim **1**, wherein the fingerprint sensor is further composed of:
an upper and lower shell that are clipped together to form a box-like structure, covering the sensor panel, first switch, second switch, fingerprint recognition processor, and dedicated sensor interface all covered inside the body, which then becomes an independent fingerprint recognition module.

11. The fingerprint sensor as claimed in claim **5**, wherein the fingerprint sensor is installed on the front end and the control board is on the backend, and the fingerprint sensor is connected to the control board through a serial interface for synchronizing a mechanical driver mechanism to perform a given task.

12. The fingerprint sensor as claimed in claim **6**, wherein the fingerprint sensor is installed on the front end and the control board is on the backend, and the fingerprint sensor is connected to the control board through a serial interface for synchronizing a mechanical driver mechanism to perform a given task.
